# EUROPEAN PATENT SPECIFICATION

(11) **EP 1 943 825 B1**
(45) Date of publication and mention of the grant of the patent: **24.06.2015**
(21) Application number: 06827379.6
(22) Date of filing: 02.11.2006
(51) Int. Cl.: H04M 3/56

(54) **SYSTEM AND METHOD FOR MANAGING THE REPLACEMENT OF AN EXISTING SUBSCRIBER CALL CONNECTION BY A CALL WAITING PARTY**
SYSTEM UND VERFAHREN ZUR VERWALTUNG DES ERSATZENS EINES BESTEHENDEN TEILNEHMERS IN EINER TELEFONVERBINDUNG DURCH EINEM IN DER TELEFONVERBINDUNG WARTENDEN TEILNEHMER
SYSTÈME ET MÉTHODE POUR GÉRER LE REMPLACEMENT D'UNE PARTIE APPELANTE EXISTANTE DANS UNE CONNEXION D'APPEL PAR UNE PARTIE APPELANTE EN ATTENTE

(30) Priority: 04.11.2005 US 267449; 04.11.2005 US 267734
(43) Date of publication of application: 16.07.2008
(73) Proprietor: Alcatel Lucent, 92100 Boulogne-Billancourt (FR)
(72) Inventor: MCCORMICK, Mark, Alan, Naperville, IL 60564 (US)
(74) Representative: Sciaux, Edmond
(86) International application number: PCT/US2006/042821
(87) International publication number: WO 2007/053751

(56) References cited:
- US-A- 5 784 448
- US-A1- 2003 156 698

## Description

### Field of the Invention

This invention relates to communication networks and the management of existing subscriber call connections with respect to call waiting parties.

### Background of the Invention

It is a problem in the field of communication networks to enable a subscriber, who is a call waiting party on an existing subscriber call connection, to be included with the two parties on the existing subscriber call connection.

Presently, when a party who is on an existing subscriber call connection has an incoming call from a third party (call waiting party) in a call waiting mode, there is no ability to enable the call waiting party to be included with the two parties on the existing subscriber call connection. The addition of another (third) party into an existing subscriber call connection can only occur in the present telephone network in the form of one of the two parties on the existing subscriber call connection initiating Three Way Calling and calling the third party. The Three Way Calling feature adds the third party to the existing subscriber call connection but cannot respond to a third party calling in to one of the two parties on an existing subscriber call connection.

Therefore, the existing communication network is unable, in an existing subscriber call connection with a call waiting party, to enable the call waiting party to be included with the two parties on the existing subscriber call connection or to enable one of the two parties on the existing call connection to drop off the call and replace this party with the call waiting party.

U.S. Patent 5,784,448 (Yaker) discloses an enhanced call waiting (ECW) feature which is provided by a switch serving a called subscriber who, while still on a first telephone call, receives a subsequent telephone call. According to ECW, the switch provides service so that the called party may select from processing treatments for the second call which, in addition to the conventional processing of a) placing the first telephone call on hold and answering the second telephone call request, or b) simply declining the subsequent telephone call request, include treatments such as: 1) declining acceptance of the subsequent telephone call request but signaling the subsequent telephone call originator, via a message, to call again at a predetermined time or at the end of a specified period of time; 2) declining acceptance of the subsequent telephone call request and signaling the subsequent telephone call originator, via a message, that the called subscriber will return the call at a predetermined time or at the end of a specified period of time; 3) bridging the subsequent telephone call originator with the first telephone call to establish a conference; 4) directing, via a message, that the telephone call be transferred to another telephone number, e.g., a secretary or voice messaging system, that is specified as part of the message; or 5) disabling call waiting while the called subscriber remains on the first call, (i) for this particular caller, (ii) for all callers except those listed on a so-called "exception" list, or (iii) for all callers. However, none of the multitude of treatments listed show or suggest the feature implemented in Applicants' system where, if the called party determines that the calling party should communicate with only the other party on the existing call connection who is presently on hold, the called party activates Applicants' system to substitute the calling party for the called party.

U.S. Patent Publication No. 2003/0156698 (Creamer) discloses a method of establishing a third party call can include, responsive to a call initiated by a third party to a directory number of a called party, determining that the called party is engaged in an existing telephone call with one or more parties. The telephone call can be processed in a telephony application, wherein the telephony application can determine whether the third party has authority to join the existing call with the called party. If so, the third party can be connected with the existing call. However, the treatment listed in the Creamer publication does not show or suggest the feature implemented in Applicants' system where, if the called party determines that the calling party should communicate with only the other party on the existing call connection who is presently on hold, the called party activates Applicants' system to substitute the calling party for the called party.

### Brief Summary of the Invention

A method and apparatus according to the present invention are set out in the independent claims, to which the reader is now referred. Preferred features are laid out in the dependent claims.

The above-described problems are solved and a technical advance achieved by the present system for adding a call waiting party to an existing subscriber call connection. This system enables a party on the existing subscriber call connection, who receives an incoming call from a third party, to drop off the existing call connection and be replaced by the third party without disrupting the existing call connection.

If the called party determines that the calling party should communicate with only the other party on the existing call connection who is presently on hold, the called party can place the calling party (also termed "call waiting party") on hold to confer with the other party on the existing call connection before adding the call waiting party into the existing call connection. The called party could alternatively dial a predetermined code to connect the call waiting party into a three way call and then subsequently enter a predetermined code to drop the called party from the call connection, allowing the other party from the original call connection and the call waiting party to continue on the call. In both cases the party dropping out can make and receive calls without interference from the call connection from which they disconnected. The call remains up until either party disconnects.

### Brief Description of the Drawings

Figure 1 illustrates, in block diagram form, the overall architecture of a telephone network and a typical call connection that uses the present system for adding a call waiting party to an existing call connection; and
Figures 2 and 3 illustrate, in flow diagram form, the operational steps taken by the present system for adding a call waiting party to an existing call connection to implement a call transfer for a subscriber.

### Detailed Description of the Invention

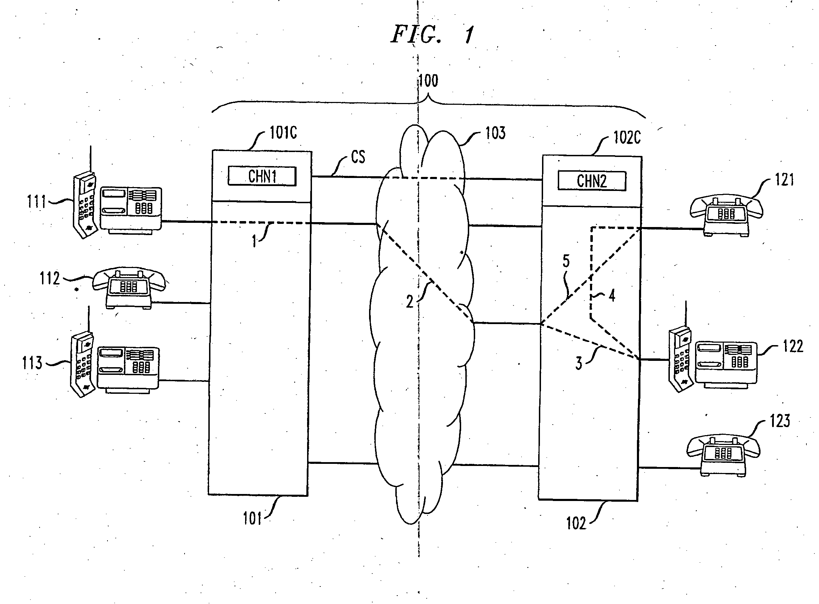

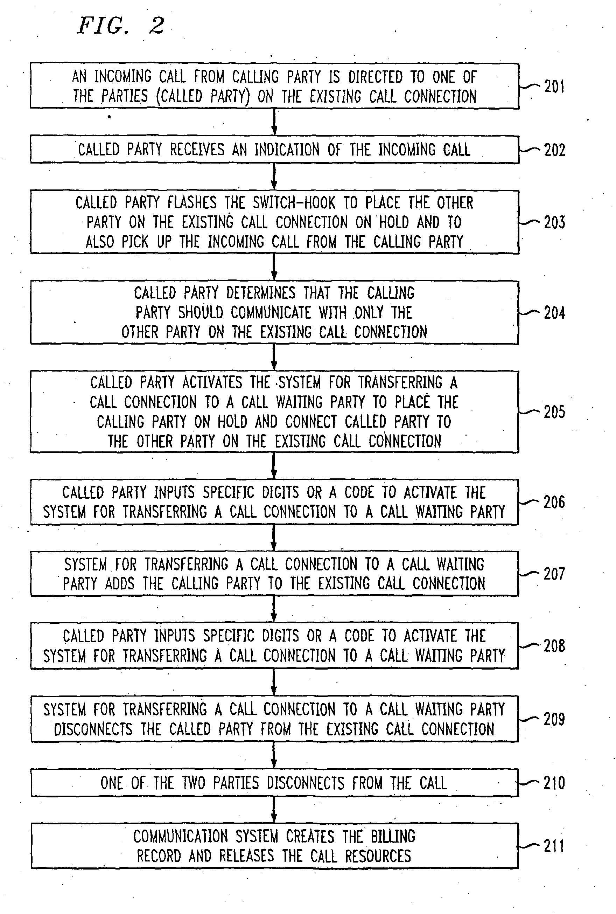

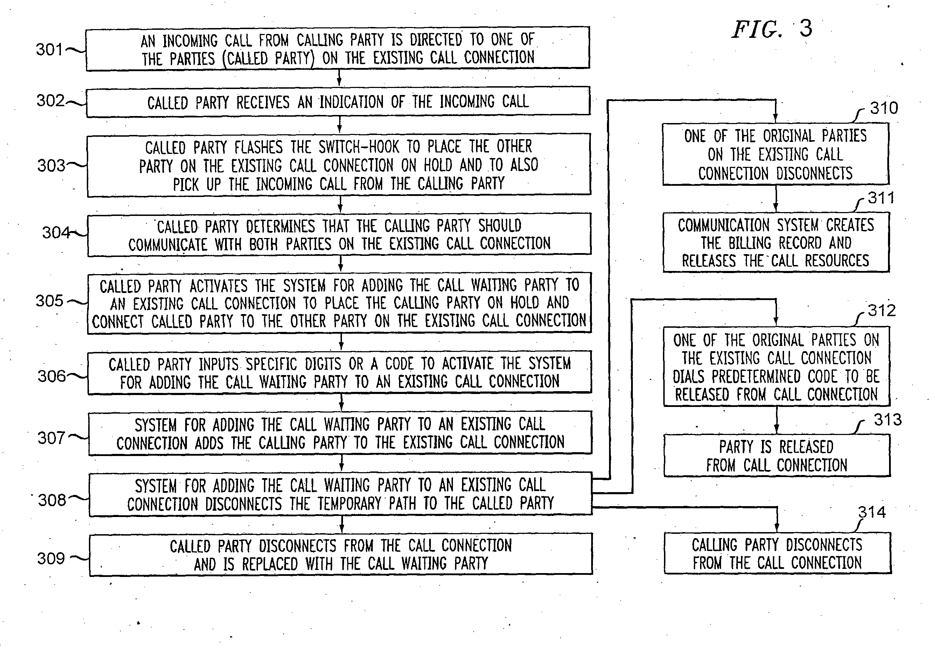

Figure 1 illustrates, in block diagram form, the overall architecture of a telephone network and a typical call connection that uses the present system for adding a call waiting party to an existing call connection; and Figures 2 and 3 illustrate, in flow diagram form, the operational steps taken by the present system for adding a call waiting party to an existing call connection to implement a call transfer for a subscriber.

The communications network comprises a traditional voice communications network that includes a plurality of local communications systems. This could be a Public Switched Telephone Network (PSTN) land configuration, wireless configuration, or a combination of the two 101C, 102C, such as telephone switching systems that are part of the PSTN 100 and are interconnected via trunk circuits (this could be an IP connection as well) to an Inter-Exchange Carrier System (IXC) 103. Each of the communications systems 101, 102 serves a plurality of terminal devices, and the communications systems 101, 102 may be interconnected via an out-of-band signaling link CS through the Inter-Exchange Carrier-System (IXC) 103, using the well-known SS7 signaling protocol. This could also be using the IP protocol as well. The operation of such a communications network is well known and is not described in detail herein. The communications systems 101, 102 provide a set of features and services to the terminal devices that they serve, and include the system for adding a call waiting party to an existing call connection CHN1, CHN2 wherein the communications systems 101, 102 implement the call connection function for the associated terminal devices in response to control signals that are received from the terminal devices.

For, the purpose of illustration, the call connection used to describe the operation of the present system for adding a call waiting party to an existing call connection CHN2 consists of terminal device 111 connected to terminal device 122. The connection extends from terminal device 111 through communication system 101 (path 1), Inter-Exchange Carrier System (IXC) 103 (path 2), communication system 102 (path 3), to terminal device 122. The use of multiple communication systems and the Inter-Exchange Carrier System (IXC) for the call connection is not a limitation on the operation of the system for adding a call waiting party to an existing call connection CHN2, since the call connection can be solely within communication system 102, or may include one or more mobile terminal devices and their associated Mobile Switching Centers (not shown).

In this environment, the only way to add a third party to the existing call connection or to substitute a third party for one of the two parties on the existing call connection is to use the Three Way Calling feature. The Three Way Calling feature is initiated when one of the two parties (first party) on the existing call connection flashes the switch hook on their terminal device to place the other party on hold and initiates a call to the third party. The third party is then connected to the first party, who can again flash the switch-hook on their terminal device to add the third party to the existing call connection. Unfortunately, this feature is only outbound capable, in that one of the two parties on the existing call connection is the only one who can contact the third party.

The system for adding a call waiting party to an existing call connection CHN2 operates to enable a third party (calling party) to contact-one-party on an existing call connection and be added to the existing call connection. This process is initiated when an incoming call from calling party located at terminal device 121 is directed to the terminal device 122 of one of the parties (called party) on the existing call connection (paths 1-3) at step 201. The called party receives an indication of the incoming call on their terminal device 122 at step 202 and flashes the switch hook of their terminal device 122 at step 203 to place the terminal device 111 of the other party on the existing call connection on hold and also to pick up the incoming call from the calling party by connecting the terminal device 121 of the calling party to the terminal device 122 of the called party over path 4. After speaking with the calling party, the called party at step 204 determines that the calling party should communicate with both the called party and the other party on the existing call connection. The called party then operates their terminal device 122 at step 205 by inputting specific digits or a code to activate the system for adding a call waiting party to an existing call connection CHN2, which responds by maintaining paths 1-3 of the existing call connection while adding the terminal device 121 of the calling party to the existing call connection via path 5 at step 206 and dropping path 4 at step 207.

All three parties are then on the call connection and continue to converse until one of the three parties disconnects from the call at step 208, creating the billing record and releasing the call resources at step 209.

Alternatively, the system for adding a call waiting party to an existing call connection operates to enable a third party (calling party) to contact one party on an existing call connection and be substituted for that party on the existing call connection. As shown in Figure 3, this process is initiated when, at step 301, an incoming call from a calling party located at terminal device 121 is directed to the terminal device 122 of one of the parties (called party) on the existing call connection (paths 1-3). The called party receives an indication of the incoming call on their terminal device 122 at step 302 and flashes the switch-hook of their terminal device 122 (or generates some other control signal) at step 303 to place the terminal device 111 of the other party on the existing call connection on hold and to also pick up the incoming call from the calling party by connecting the terminal device 121 of the calling party to the terminal device 122 of the called party over path 4. After speaking with the calling party, the called party at step 304 determines that the calling party should communicate with only the other party on the existing call connection, who is presently on hold. The called party then operates their terminal device 122 at step 305 to place the calling party (also termed "call waiting party") on hold to confer with the other party on the existing call connection before adding the call waiting party into the existing call connection.

The process of transferring a call connection to a call waiting party can be realized in two different ways. The called party can dial a predetermined code to connect the call waiting party into a three way call and then subsequently enter a predetermined code to drop the called party from the call connection, allowing the other party from the original call connection and the call waiting party to continue on the call. Alternatively, the called party can dial a predetermined code to connect the call waiting party into the call connection and to drop the called party from the call connection, allowing the other party from the original call connection and the call waiting party to continue on the call. Since the second case is a subset of the first case, the three way connection is described herein, with the realization that the process can be implemented by simply jumping to step 307.

The called party then operates their terminal device 122 at step 306 by inputting specific digits or a code to activate the system for adding a call waiting party to an existing call connection CHN2, which responds by maintaining paths 1-2 of the existing call connection while adding the terminal device 121 of the calling party to the existing call connection via path 5 at step 307. The three parties are then all connected and can converse until the called party at step 308 operates their terminal device 122 to input specific digits or a code to activate the system for adding a call waiting party to an existing call connection CHN2, which responds by disconnecting the terminal device 122 of the called party from the existing call connection at step 309.

Two parties are then on the call connection (paths 1, 2, 5) - the calling party at terminal device 121 and the other party on the existing call connection at terminal device 111 - and these two parties continue to converse until one of the two parties disconnects from the call at step 310, creating the billing record and releasing the call resources at step 311. Alternatively, one of these two parties can receive a subsequent incoming call and the above-described process can be repeated, where the calling party is added to the existing call connection or a three way call can be created.

This service is beneficial in the case of a service dispatcher (called party), where a service personnel calls in to the dispatcher and a third party customer (calling party) is added to the call, and the service personnel and customer converse without the need for the dispatcher being involved.

### Summary

The system for adding a call waiting party to an existing call connection enables a party on the existing subscriber call connection who receives an incoming call from a third party to replace the calling party for one of the existing subscribers in the call connection.

## Claims

1. A system for adding a call waiting party to an existing call connection between a first party located at a first subscriber terminal device and a second party located at a second subscriber terminal device, comprising:
incoming call processing means, responsive to an incoming call from a calling party directed to a one of a first party and a second party engaged in an existing subscriber call connection, for generating an alert indication at the one of said first subscriber terminal device and said second subscriber terminal device associated with said one of a first party and a second party; and wherein the system is **Characterized By**:
calling party substitution means, responsive to said one of said first party and said second party generating a predetermined signal at the respective one of said first subscriber terminal device and said second subscriber terminal device, for substituting said calling party for one of said first party and said second party on said existing call connection.

2. The system for adding a call waiting party to an existing call connection of claim 1, wherein said calling party substitution means comprises:
call hold means, responsive to said one of a first party and a second party flashing the switch hook on their associated subscriber terminal device in response to receipt of said alert indication, for placing the other of said first party and a second party on hold and for connecting said calling party with said one of said first party and a second party; and
disconnect means, responsive to said one of said first party and said second party generating said predetermined signal at the respective one of said first subscriber terminal device and said second subscriber terminal device for disconnecting the party performing the switch hook flash.

3. A method of adding a call waiting party to an existing call connection between a first party located at a first subscriber terminal device and a second party located at a second subscriber terminal device, comprising:
generating, in response to an incoming call directed to a one of a first party and a second party engaged in an existing subscriber call connection, an alert indication at the one of said first subscriber terminal device and said second subscriber terminal device associated with said one of a first party and a second party; and wherein the system is **Characterized By**:
substituting, in response to said one of said first party and said second party generating a predetermined signal at the respective one of said first subscriber terminal device and said second subscriber terminal device, said incoming call for said one of said first party and said second party on said existing call connection.

4. The method of adding a call waiting party to an existing call connection of claim 3, wherein said step of substituting comprises:
placing, in responsive to said one of a first party and a second party flashing the switch hook on their associated subscriber terminal device in response to receipt of said alert indication, the other of said first party and a second party on hold and for connecting said calling party with said one of said first party and a second party; and
releasing, in response to said one of said first party and said second party generating said predetermined signal at the respective one of said first subscriber terminal device and said second subscriber terminal device, the party that performed a switch hook flash.

## Patentansprüche

1. System zum Hinzufügen eines auf einen Anruf wartenden Teilnehmers zu einer bestehenden Anrufverbindung zwischen einem ersten Teilnehmer auf einem Teilnehmerendgerät und einem zweiten Teilnehmer, der sich an einem zweiten Teilnehmerendgerät befindet, umfassend:
Mittel zum Verarbeiten von eingehenden Anrufen, die auf einen eingehenden Anruf von einem anrufenden Teilnehmer reagieren, der an einen eines ersten und zweiten Teilnehmer gerichtet ist, welcher an einer bereits bestehenden Teilnehmeranrufverbindung beteiligt ist, zum Erstellen einer Alarmmeldung entweder an dem besagten ersten Teilnehmerendgerät oder an dem besagten zweiten Teilnehmerendgerät, das mit dem besagten einen des ersten oder zweiten Teilnehmers verbunden ist; und wobei das System durch Folgendes gekennzeichnet wird
Mittel zum Ersetzen des anrufenden Teilnehmers, die auf den besagten einen des ersten oder zweiten Teilnehmers reagieren, welcher ein vorher festgelegtes Signal beim jeweiligen besagten entweder ersten Teilnehmerendgeräts oder zweiten Teilnehmerendgeräts erzeugen, um den besagten anrufenden Teilnehmer bei der besagten bestehenden Anrufverbindung durch einen des besagten ersten und zweiten Teilnehmers zu ersetzen.

2. System zum Hinzufügen eines auf einen Anruf wartenden Teilnehmers zu einer bestehenden Anrufverbindung nach Anspruch 1, wobei die besagten Mittel zum Austauschen umfassen:
Mittel zum Halten von Anrufen, die auf einen des besagten ersten Teilnehmers und zweiten Teilnehmers reagieren, welcher den Schalthaken auf ihrem verbundenen Teilnehmerendgerät als Reaktion auf den Empfang der besagten Alarmmeldung einblenden, um den anderen des besagten ersten Teilnehmers und zweiten Teilnehmers in der Warteschleife zu halten und um den besagten anrufenden Teilnehmer mit dem besagten einen des ersten und zweiten Teilnehmers zu verbinden; und
Mittel zum Trennen der Verbindung, die auf den besagten einen des ersten und zweiten Teilnehmers reagieren, welcher das besagte vorher festgelegte Signal beim jeweiligen besagten einen des ersten zweiten Teilnehmerendgeräts erzeugt, um die Verbindung des Teilnehmers zu trennen, der die Einblendung des Schalthakens ausführt.

3. Verfahren zum Hinzufügen eines auf einen Anruf wartenden Teilnehmers zu einer bestehenden Anrufverbindung zwischen einem ersten Teilnehmer auf einem ersten Teilnehmerendgerät und einem zweiten Teilnehmer, der sich an einem zweiten Teilnehmerendgerät befindet, umfassend:
Erstellen, als Reaktion auf einen eingehenden Anruf, der an einen eines ersten und zweiten Teilnehmers, der an einer bereits bestehenden Teilnehmeranrufverbindung beteiligt ist, gerichtet ist; einer Alarmmeldung an dem einen des besagten ersten und zweiten Teilnehmerendgeräts, assoziiert mit dem besagten einen des ersten und zweiten Teilnehmers, und wobei das System durch Folgendes gekennzeichnet wird
Ersetzen, als Reaktion darauf, dass der besagte eine des besagten ersten und besagten zweiten Teilnehmers ein vorher festgelegtes Signal beim jeweiligen einen des besagten ersten und des besagten zweiten Teilnehmerendgeräts erzeugt, des besagten eingehenden Anrufs durch den besagten einen des besagten ersten und des besagten zweiten Teilnehmers bei der besagten bestehenden Anrufverbindung.

4. Verfahren zum Hinzufügen eines auf einen Anruf wartenden Teilnehmers zu einer bestehenden Anrufverbindung nach Anspruch 3, wobei der besagte Schritt des Ersetzens umfasst:
Halten, als Reaktion auf den besagten einen eines ersten und zweiten Teilnehmers, welche den Schalthaken auf ihrem assoziierten Teilnehmerendgerät als Reaktion auf den Empfang der besagten Alarmmeldung einblenden; des anderen des besagten ersten Teilnehmers und zweiten Teilnehmers in der Warteschleife und zum Verbinden des besagten anrufenden Teilnehmers mit dem besagten einen des ersten und zweiten Teilnehmers und
Freigeben, als Reaktion auf den besagten einen des besagten ersten und des besagten zweiten Teilnehmers, welche das besagte vorher festgelegte Signal beim jeweiligen eines des besagten ersten und des besagten zweiten Teilnehmerendgeräts erzeugen, des Teilnehmers, der die Einblendung des Schalthakens ausführt.

## Revendications

1. Système d'ajout d'une partie en attente d'appel à une connexion existante d'appel entre une première partie située au niveau d'un premier dispositif terminal d'abonné et une deuxième partie située au niveau d'un deuxième dispositif terminal d'abonné, comprenant :
des moyens de traitement d'appel entrant, en réponse à un appel entrant provenant d'une partie appelante dirigé vers une partie parmi une première partie et une deuxième partie engagée dans une connexion existante d'appel d'abonné, pour générer une indication d'alerte au niveau du dispositif parmi ledit premier dispositif terminal d'abonné et ledit deuxième dispositif terminal d'abonné associé à une partie parmi une première partie et une deuxième partie ; et dans lequel le système est **caractérisé par** :
des moyens de remplacement de partie appelante, en réponse à la génération par ladite partie parmi ladite première partie et ladite deuxième partie d'un signal prédéterminé au niveau du dispositif respectif parmi ledit premier dispositif terminal d'abonné et ledit deuxième dispositif terminal d'abonné, pour remplacer ladite partie appelante par une partie parmi ladite première partie et ladite deuxième partie sur ladite connexion existante d'appel.

2. Système d'ajout d'une partie en attente d'appel à une connexion existante d'appel selon la revendication 1, dans lequel lesdits moyens de remplacement de partie appelante comprennent :
des moyens de mise en attente d'appel, en réponse au clignotement par ladite partie parmi une première partie et une deuxième partie du crochet commutateur sur leur dispositif terminal d'abonné associé en réponse à la réception de ladite indication d'alerte, pour mettre l'autre partie parmi ladite première partie et une deuxième partie en attente et pour connecter ladite partie appelante à ladite partie parmi ladite première partie et une deuxième partie ; et
des moyens de déconnexion, en réponse à la génération par ladite partie parmi ladite première partie et ladite deuxième partie dudit signal prédéterminé au niveau du dispositif respectif parmi ledit premier dispositif terminal d'abonné et ledit deuxième dispositif terminal d'abonné pour déconnecter la partie faisant clignoter le crochet commutateur.

3. Procédé d'ajout d'une partie en attente d'appel à une connexion existante d'appel entre une première partie située au niveau d'un premier dispositif terminal d'abonné et une deuxième partie située au niveau d'un deuxième dispositif terminal d'abonné, comprenant l'étape suivante :
générer, en réponse à un appel entrant dirigé vers une partie parmi une première partie et une deuxième partie engagée dans une connexion existante d'appel d'abonné, une indication d'alerte au niveau du dispositif parmi ledit premier dispositif terminal d'abonné et ledit deuxième dispositif terminal d'abonné associé à une partie parmi une première partie et une deuxième partie ; et dans lequel le système est **caractérisé par** l'étape suivante :
remplacer, en réponse à la génération par ladite partie parmi ladite première partie et ladite deuxième partie d'un signal prédéterminé au niveau du dispositif respectif parmi ledit premier dispositif terminal d'abonné et ledit deuxième dispositif terminal d'abonné, ledit appel entrant par ladite partie parmi ladite première partie et ladite deuxième partie sur ladite connexion existante d'appel.

4. Procédé d'ajout d'une partie en attente d'appel à une connexion existante d'appel selon la revendication 3, dans lequel ladite étape de remplacement comprend les étapes suivantes :
mettre en attente, en réponse au clignotement par ladite partie parmi une première partie et une deuxième partie du crochet commutateur sur leur dispositif terminal d'abonné associé en réponse à la réception de ladite indication d'alerte, l'autre partie parmi ladite première partie et une deuxième partie et pour connecter ladite partie appelante à ladite partie parmi ladite première partie et une deuxième partie ; et
libérer, en réponse à la génération par ladite partie parmi ladite première partie et ladite deuxième partie dudit signal prédéterminé au niveau du dispositif respectif parmi ledit premier dispositif terminal d'abonné et ledit deuxième dispositif terminal d'abonné, la partie qui a fait clignoter le crochet commutateur.
